# EUROPEAN PATENT APPLICATION

(11) **EP 4 803 488 A1**
(43) Date of publication of application: **09.09.2026**
(21) Application number: 25161612.4
(22) Date of filing: 04.03.2025
(51) Int. Cl.: C01G 53/84

(54) **A METHOD FOR PRODUCING A PARTICULATE MATERIAL**

(71) Applicant: Umicore Battery Materials Finland Oy, 67900 Kokkola (FI)
(72) Inventor: VÄHÄTIITTO, Tuomo, 67900 Kokkola (FI); NIITTYKOSKI, Janne, 67900 Kokkola (FI); HIETANIEMI, Marianna, 67900 Kokkola (FI)
(74) Representative: Umicore RDI Patent Department

(57) **Abstract**

It is disclosed a method for producing a particulate metal M-based material, being hydroxide, oxyhydroxide, oxide, or any combination thereof, the method comprising (a) providing an aqueous solution (Aₛ) and a precipitating agent, wherein the aqueous solution (Aₛ) contains salts of metal M having Ni, Mn, Co in a molar ratio of 1-x-y : x : y, wherein 0.15≤1-x-y-z≤0.45, 0.55≤x≤0.85, 0.00≤y≤0.15; and (b) combining the aqueous solution (Aₛ) and the precipitating agent at a pH value of less than 11.0, determined at 20°C, thereby obtaining a slurry comprising the particulate metal M-based material; wherein at least a portion of step (b) is performed in an ultrasonic environment.

## Description

### TECHNICAL FIELD

In general, the present disclosure relates to the preparation of a metal-containing hydroxide or oxyhydroxide material, also referred to as precursor material and pCAM, which is suitable for the production of a cathode active material (CAM).

### BACKGROUND

Cathode active materials (CAM) for secondary batteries are typically derived from precursors of cathode active materials (pCAM), which are usually transition metal hydroxides, oxides, oxyhydroxides, or their mixtures. These precursor materials are generally produced through precipitation processes that involve combining a transition metal salt solution with an alkali solution, in the possible presence of a complexing agent.

Cathode materials are critical to the performance of rechargeable batteries, significantly impacting their efficiency, capacity, and longevity. Extensive research and development have focused on these materials and their precursors, with key trends including improving tap density, surface area, and particle sphericity. Higher tap density allows for more active material to be packed into a given volume, increasing the energy density of the battery. Increasing the surface area of the CAM improves the contact between the electrolyte and the active material, which can improve the rate capability and overall performance of the battery. Improving particle sphericity affects properties such as packing density and electrochemical performance. Since the sphericity, tap density, and surface area of the CAM are inherited from the precursor material, it is beneficial to be able to control these qualities through the pCAM manufacturing process.

High capacity in rechargeable batteries is important for enhancing their performance, often achieved using high nickel content in the cathode materials. However, nickel is expensive, posing a significant downside. One cost-effective alternative is High Lithium Manganese (HLM) cathode materials, where manganese content exceeds 50% of all the transition metals. For HLM cathode materials it is still a challenge to produce such pCAM with sufficiently high tap density, surface area and adequate particle sphericity. Therefore there is a need to improve existing precipitation processes for high manganese pCAMs.

### SUMMARY

An object of the present disclosure is to provide improved methods for producing positive electrode active precursor material when manganese is the most abundant of the precipitated metals. A further object is to enhance the precipitation methods, resulting in improved structural characteristics of high manganese pCAM materials. Additionally, a further object is to enhance particle characteristics such as tap density, surface area, and sphericity, which are helpful for optimizing the performance of the resulting battery materials.

One object of the present disclosure is achieved by providing a method for producing a particulate metal M-based material, being hydroxide, oxyhydroxide, oxide, or any combination thereof. Particularly, it involves producing particulate materials that contain metal (denoted as M) in the form of hydroxide, oxyhydroxide, oxide, or a combination of these forms. The metal M may be expressed as Ni_{1-x-y}MnₓCo_{y}.The method comprises
(a) providing an aqueous solution (Aₛ) and a precipitating agent, wherein the aqueous solution (Aₛ) contains salts of metal M having Ni, Mn, Co in a molar ratio of 1-x-y : x: y, wherein 0.15≤1-x-y-z≤0.45, 0.55≤x≤0.85, 0.00≤y≤0.15; and
(b) combining the aqueous solution (Aₛ) and the precipitating agent at a pH value of less than 11.0, determined at 20°C, thereby obtaining a slurry comprising the particulate metal M-based material,
wherein at least a portion of step (b) is performed in an ultrasonic environment.

It has been observed that combining the streams of the aqueous solution (Aₛ) and the precipitating agent in an ultrasonic environment at a pH value of less than 11.0, determined at 20°C, improves the tap density, surface area and sphericity of the pCAM obtained, while also reducing the sulfate impurities, as demonstrated by the examples provided in the present disclosure.

Various embodiments are disclosed in the claims and the description of the present disclosure. The embodiments and examples recited in the claims and description are freely combinable with one another, unless otherwise expressly stated. Throughout the disclosure, where numerical ranges are given, the ranges include endpoint values unless otherwise expressly stated.

### BRIEF DESCRIPTION OF THE FIGURES

Figure 1 is a SEM image at 5000x magnification of Example 1.
Figure 2 is a SEM image at 5000x magnification of Comparative example 1.
Figure 3 is a SEM image at 5000x magnification of Comparative example 5.

### DETAILED DESCRIPTION

While this disclosure describes several embodiments, it will be understood by those skilled in the art that various changes can be made, and equivalents can be substituted for elements thereof without departing from the scope of the disclosed embodiments. In addition, many modifications can be made to adapt a particular situation or material to the teachings of this disclosure without departing from the scope thereof. Therefore, this disclosure is not intended to be limited to the particular embodiments disclosed as the best mode contemplated for carrying out this disclosure. It should also be understood that the embodiments disclosed herein are to be considered only in a descriptive sense and not for purposes of limitation. Descriptions of features or aspects of each example should be considered as available for other similar features or aspects of other embodiments.

The term "comprising", as used herein and in the claims, should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present disclosure, the only relevant components of the composition are A and B. Accordingly, the terms "comprising" and "including" encompass the more restrictive terms "consisting essentially of" and "consisting of".

As used herein, the term "and/or", when used in a list of two or more items, means that any one of the listed items can be used alone, or any combination of two or more of the listed items can be used. For example, when a composition is described as containing components X, Y and/or Z, the composition may contain X alone; Y alone; Z alone; X and Y in combination; X and Z in combination; Y and Z in combination; or X, Y and Z in combination.

In the present disclosure all given pH values refer to values which are measured at a temperature of 20 °C, unless otherwise stated.

In the present disclosure, the hydroxide particles/particulate compounds produced may include, in addition to a pure hydroxide phase, an oxyhydroxide phase or a combination thereof. Which phase, either a hydroxide or an oxyhydroxide phase or the combination thereof, is formed in the process depends, in particular, on the oxidation reaction conditions, as will be appreciated by those skilled in the art.

In one aspect, the present disclosure relates to a method for producing a particulate metal M-based material, being hydroxide, oxyhydroxide, oxide, or any combination thereof. The metal M may be expressed as Ni_{1-x-y}MnₓCo_{y}. The method comprises
a) providing an aqueous solution (Aₛ) and a precipitating agent, wherein aqueous solution (Aₛ) contains salts of metal M having Ni, Mn, Co in a molar ratio of 1-x-y : x: y, wherein 0.15≤1-x-y-z≤0.45, 0.55≤x≤0.85, 0.00≤y≤0.15; and
b) combining the aqueous solution (Aₛ) and the precipitating agent at a pH value of less than 11.0, determined at 20°C, thereby obtaining a slurry comprising the particulate metal M-based material,
wherein at least a portion of step (b) is performed in an ultrasonic environment.

Alternatively or additionally, M may be presented in the following manner Ni_{t'}Mn_{x'}Co_{y'}A_{z'}: M comprises:
- Mn in a content of x', wherein 55≤x'≤85 mol%, relative to M;
- Co in a content of y', wherein 0.0≤y'≤15 mol%, relative to M;
- A in a content of z', wherein A is selected from the group consisting of Ba, Ca, Ce, Cr, La, Mg, Mo, Nb, Sr, Ti, Y, V, W, Zn, Al, and combinations thereof, and 0.0≤z'≤10 mol%, relative to M;
- Ni in a content of t', wherein t'=(100-x'-y'-z')mol% and 15≤t'≤45 mol% relative to M.

Accordingly, the method comprises at least two steps, hereinafter also referred to as step (a) and step (b). The method may include further optional steps. In the context of the present disclosure, the phrase "at least a portion of step (b) is performed in an ultrasonic environment" refers to that in the method at least a portion of the time during step (b) is performed in an ultrasonic environment, and that in the method at least a portion of the combined solution of the aqueous solution (Aₛ) and the precipitating agent of in step (b) is subjected to an ultrasonic environment at specific locations. In other words, it means that at least some part of the process of combining the aqueous solution (Aₛ) and the precipitating agent to obtain a slurry is carried out in an ultrasonic environment, and that the ultrasonic environment can be applied locally to specific parts of the combined solutions (i.e. mixture) so that the ultrasonic treatment doesn't need to be uniformly applied to the entire mixture but can be focused on certain areas or spots within the mixture.

Step (b) may be carried out in a stirred tank reactor having a reaction vessel equipped with a stirring and reaction solution feed means. The further optional steps may include, for example, a subsequent step to step (c), which may be due to the median particle size D50 of the second slurry being comparable to a desired target particle size. At this point, the slurry can be removed from the reactor, for example via a bottom valve, and delivered to post-processing, such as washing, filtering and drying, to obtain a powdered pCAM product.

The metal content values of M, such as x', y', etc. can be measured by the inductively coupled plasma optical emission spectroscopy (ICP-OES) method, for example. It can be understood that the expression "≥0" in the chemical formulas includes the absence of an element.

The D50 value can be measured using a particle size analyzer such as a laser diffraction analyzer, for example. The D50 value, also known as the particle size distribution or the median value of the particle size distribution, is the value of the particle diameter at 50% in the cumulative distribution.

Performing reaction steps in an ultrasonic environment can be implemented by, for example, using an ultrasonic processor. Typically an ultrasonic processor comprises an ultrasonic generator, a piezoelectric transducer as an ultrasonic source, and an ultrasonic horn. To provide the ultrasonic environment, the output tip of the horn is in direct contact with the liquid and delivers the ultrasonic energy into the liquid. Depending on the dimension of the horn, the output tip may be placed at a suitable distance from the feed tube of the metal M sulfate solution. For example, for a ultrasonic processor operating at a frequency of 20 kHz with a 12 mm horn, the ultrasonic source (output tip) may be placed at around 2-8 mm away from the feed tube of the metal sulfate solution, such as 4 mm from the inner wall of the tip of the nickel manganese sulfate solution feed tube inside the reactor in a case where the hydraulic diameter of the tip of the nickel manganese sulfate solution feed tube was 4 mm, and the amplitude of the ultrasonic environment was set to 60 µm. In one embodiment of the present disclosure, the ultrasonic environment is applied such that the distance from the location of a tip of a solution (Aₛ) introducing inlet to an output tip of an ultrasonic source is at most 3 times or at most 2 times the hydraulic diameter of the solution (Aₛ) introducing inlet. When the ultrasonic source is arranged within these ranges, the precipitation is more likely to occur in the ultrasonic environment. The amplitude of the ultrasonic environment can be increased along with the distance to achieve the same effect.

In one embodiment of the present disclosure, the ultrasonic environment is applied such that the distance from the location of a tip of a solution (As) introducing inlet to an output tip of an ultrasonic source is at least 0.25 times or at least 0.5 times the hydraulic diameter of the solution (As) introducing inlet. When the ultrasonic source is within these ranges, the ultrasonic source is not interfering the inflow of the solution (As).

In one embodiment of the present disclosure, the ultrasonic environment comprises sound waves with an amplitude of at least 24 µm, preferably at least 30 µm, more preferably at least 48 µm. Higher amplitudes, such as 48 µm, generate more intense cavitation, which can enhance the mixing and reaction rates within the solution (As). This results in improved process outcomes, such as increased reaction efficiency and better homogenization. By adjusting the amplitude of the sound waves, the process can be fine-tuned to meet specific requirements, ensuring optimal performance for various applications.

In one embodiment of the present disclosure, the ultrasonic environment comprises sound waves with an amplitude of at most 120 µm, preferably at most 96 µm, more preferably at most 90 µm, and most preferably at most 72 µm. Limiting the amplitude to these specified ranges is beneficial for ensuring the integrity of the material being precipitated. Higher amplitudes can disrupt the formation of spherical particles, leading to irregular growth and the creation of new particles through unwanted nucleation.

In one embodiment of the present disclosure, the combining in step (b) comprises stirring with at least 14.31 W/L when the median particle size D50 of the slurry is 3 µm or less. When the particle size is small, sufficient stirring power is needed to promote uniform growth. This helps to avoid the formation of aggregates and ensures that the particles remain evenly distributed throughout the slurry.

In one embodiment of the present disclosure, wherein the combining in step (b) comprises stirring with less than 17.1 W/L when the median particle size D50 of the slurry is 6 µm or more. Maintaining the stirring power below this threshold is beneficial to prevent excessive nucleation. Stirring too heavily can introduce high shear forces that promote the formation of new particles, leading to an increase in nucleation. This, in turn, increases the span of the particle size distribution, resulting in a less uniform product.

In one embodiment of the present disclosure, the pH of the slurry is 10.8 or less, or 10.5 or less, or 10.3 or less, or 10.1 or less, as determined at 20°C. Maintaining the pH in this range ensures that a precipitate resulting from the precipitation of the metals M_{c} contained in the solution (Aₛ) with the precipitating agent contained in the solution grows on the particles present in the slurry instead of nucleating new particles. If the pH is above 11.0, there is a risk that nucleation will occur limiting particle growth and widening the span.

In one embodiment of the present disclosure, the pH of the slurry is more than 9. When the pH is below 9, there is a higher risk that metals will remain dissolved in the solution due to increased solubility. By keeping the pH above 9, the process promotes the precipitation of metals, leading to more efficient separation and recovery.

In one embodiment of the present disclosure, the step (b) is carried out at a temperature range of 30-60°C.

In one embodiment of the present disclosure, the streams of the solution (Aₛ) and the precipitating agent are combined until the median particle size D50 in the slurry is 2.5-15.0 µm or 2.5-10.0 µm or 2.5-6.0 µm.

In one embodiment of the present disclosure, the beginning of step (b) a seed slurry comprising particles of hydroxide or oxyhydroxide of metals Mc is combined with the streams of the solution (As) and the precipitating agent.

In one embodiment of the present disclosure, the M_{c}=Ni_{1-xc-yc-zc}Mn_{xc}Co_{yc}, with 0≤xc≤0.85, 0≤yc≤0.35, 0≤zc<0.1, and 0.15≤1-xc-yc-zc≤1.

In one embodiment of the present disclosure, the seed slurry contains NH_{3(aq)} less than or equal to 0.4 g/l, or less than or equal to 0.3 g/l, or less than or equal to 0.2 g/l or less than or equal to 0.1 g/l. When the ammonia level of the seed slurry is within these ranges, the secondary particles in the reaction slurry are less likely to agglomerate with each other, thus improving the sphericity of the particles obtained.

In one embodiment of the present disclosure, the median particle size D50 in the seed slurry is 0.7-3.0 µm or 0.7-2.0 µm.

In one embodiment of the present disclosure, wherein metal M can have additional one or more elements selected from Ba, Ca, Ce, Cr, La, Mg, Mo, Nb, Sr, Ti, Y, V, W, Zn, and Al.

In one embodiment of the present disclosure, the precipitating agent comprises at least one alkali metal hydroxide such as sodium hydroxide or potassium hydroxide, preferably wherein the precipitating agent is provided as a solution.

In one embodiment of the present disclosure, step (b) is carried out without the provision of a source of ammonia.

Step (b) may be carried out in a stirred tank reactor having a reaction vessel equipped with a stirring and reaction solution feed means. In an embodiment step (b) is carried out in a batchwise operated stirred tank reactor.

In an embodiment the process is carried out in a batchwise manner.

The precipitating agent containing an alkali metal hydroxide is not particularly limited and general aqueous solutions of alkali metal hydroxides such as sodium hydroxide and potassium hydroxide can be used. The precipitating agent, such as alkali metal hydroxide, can be added directly to the reaction mixture/slurry and combined with the other reaction solutions but is preferably added as an aqueous solution from the point of view of ease of pH control. In the case when the precipitating agent is alkali metal hydroxide, the concentration of the aqueous solution of alkali metal hydroxide is preferably 20 wt.% to 50 wt.%, more preferably 20 to 30 wt.%. By controlling the concentration of the solution to such a range, it is possible to prevent the pH from increasing locally at the point of addition while suppressing the amount of solvent, typically water, supplied to the reactor, and thus to easily control the particle size distribution of the prepared material.

In one embodiment of the present disclosure, step (a) and/or step (b) is performed in an inert atmosphere. This can be achieved by introducing nitrogen gas, a rare gas, a noble gas, or a mixture of these gases into the vessel of a stirred tank reactor used for the step.

In one embodiment of the present disclosure, a clarifier or concentrator (i.e., a filtering device) is used in step (a) and/or step (b) to remove mother liquor. Such filter device(s) is (are) connected to the stirred tank reactor in such a manner that mother liquor can be removed, but the solids are retained in the reactor.

The salts of the metals M and M_{c} are water soluble salts of nickel and cobalt and manganese and may preferably be the respective water-soluble salts of Ni2+ and Co2+ and Mn2+. The water-soluble salts of the metals may be, for example, nitrates and sulfates, for instance. In one embodiment, the aqueous solution (Aₛ) in step (a) and/or the aqueous solution (Aₛ) in step (b) contains sulfate salts of metal M and M_{c}, respectively.

The solution (Aₛ) in step (a) and/or the solution (Aₛ) in step (b) is prepared by dissolving compounds containing transition metals (Ni, Co, Mn, and optionally metal A). In the precipitation process, the ratio of metal elements in the solutions containing the transition metals is approximately the same as the composition ratio in the obtained hydroxide or oxyhydroxide material. For this reason, the composition of each metal element in the solution (Aₛ) used can be appropriately adjusted according to the intended composition of the material obtained from the process. The compounds of transition metal elements (Ni, Co, Mn, and optionally metal A) used in the preparation of the solution (Aₛ) are not particularly limited but it is preferable to use water-soluble nitrates, sulfates, and hydrochlorides due to ease of handling and it is particularly preferable to suitably use sulfates due to cost and of preventing stirring of halogen. The concentration of metals in the solution (Aₛ) is preferably 100 g/l or more and 400 g/l or less. When the concentration of metals in the solution (Aₛ) is less than 100 g/l, the amount of precipitated (crystallized) material per batch decreases and thus the productivity decreases in some use cases. On the other hand, when the concentration of metals in the solution (Aₛ) exceeds 400 g/l, the concentration exceeds the saturation concentrations at room temperature, and it is thus concerned that crystals of a metal compound will be redeposited to clog the supply lines and the like.

The method of providing the streams of the solutions of the method according to the present disclosure, such as (Aₛ), is not particularly limited. For example, they may be fed by pumping means that are advantageously capable of controlling their flow rates, such as metering pumps, while being sufficiently stirred during their combination in the precipitation process step.

The mechanical agitation power (W/L) is calculated as the power input to the stirring mechanism (in watts) divided by the volume of the slurry (in liters). Watts per Liter (W/L) is calculated by the principles of fluid dynamics, using the general formula $\frac{W}{L} = ρ ∗ {N}^{3} ∗ {D}^{5} ∗ Nρ$*,* where *ρ* represents the fluid density, *N* is the rotational speed of the impeller in revolutions per second, D is the impeller diameter in meters, and *Np* is the dimensionless power number of the impeller.

Modifications of the disclosure will occur to those skilled in the art and to those who make or use the disclosure. Therefore, it is understood that the embodiments described above are merely for illustrative purposes and not intended to limit the scope of the disclosure, which is defined by the following claims, as interpreted according to the principles of patent law, including the doctrine of equivalents.

### EXPERIMENTAL ANALYSIS USED IN THE EXAMPLES AND THE COMPARATIVE EXAMPLES

The following analysis methods are used in the Examples and the Comparative Example:

### A) pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

### B) Particle size distribution (PSD) analysis

The PSD is measured using a Malvern Mastersizer 3000 with Hydro MV wet dispersion accessory after dispersing examples as described herein below of positive electrode active material powders in an aqueous medium. To improve the dispersion of the positive electrode active material powder examples, sufficient ultrasonic irradiation and stirring is applied, and an appropriate surfactant is introduced. D50 is defined as the particle size at 50% of the cumulative volume % distribution.

### C) Surface area analysis

The specific surface area (SSA) of the samples, including cathode active material precursors and final products, was measured using the standard Brunauer-Emmett-Teller (BET) method according to ISO 9277, performed on a Quantachrome^{®} Autosorb instrument. A powder sample was placed in the sample tube and heated at 90 °C under nitrogen (N2) gas for 2 hours to remove adsorbed species. Before the BET measurement, the sample was degassed at 200 °C for 6 hours to eliminate moisture completely. The instrument conducted the nitrogen adsorption test at 77 K. By obtaining the nitrogen isothermal absorption/desorption curve, the total specific surface area of the sample in m²/g was derived.

### D) Tap density analysis

The tap density (TD) measurement was conducted using a J. Engelsmann Stamping Volumeter STAV II instrument. A graduated measuring cylinder (100 ml) containing the sample (with a mass W, approximately 60-120 g) was mechanically tapped 5000 times, following the ASTM B-527 tap density measurement procedure. The initial powder volume was recorded and tapping continued until no further change in volume (V in cm³) or mass (W) was observed. The TD was calculated as TD = W/V.

### E) Inductively Coupled Plasma Optical Emission Spectrometry (ICP-OES) measurement

The pCAM material examples as described herein below are measured by the Inductively Coupled Plasma - Optical Emission Spectrometry (ICP-OES) method using an Agillent ICP 720-OES. 1 gram of a powder sample of each example is dissolved into 50 mL high purity hydrochloric acid in an Erlenmeyer flask. The flask is covered by a watch glass and heated on a hot plate at 380°C until complete dissolution of the sample. After being cooled to room temperature, the solution and the rinsing water of Erlenmeyer flask are transferred to a 250 mL volumetric flask. Afterwards, the volumetric flask is filled with DI water up to the 250 mL mark, followed by complete homogenization. An appropriate amount of solution is taken out by pipette and transferred into a 250 mL volumetric flask for the 2nd dilution, where the volumetric flask is filled with internal standard and 10% hydrochloric acid up to the 250 mL mark and then homogenized. Finally, this solution is used for ICP-OES measurement. The contents/compositions of Ni, Mn, and Co are expressed as mol% of the total of these contents.

### F) Particle circularity analysis

The circularity of the obtained pCAM material was determined using an image analysis algorithm programmed in the Python programming language using the Python Pillow Library (PIL) according to the following steps:
Step 1) Open the file containing a 750X magnification SEM image of the pCAM material sample to be analyzed.
Step 2) Determine the area of a particle Pᵢ by counting the number of pixels that belong to the particle Pi.
Step 3) Determine the radius rᵢ of a perfect circle Cᵢ with the same area as Pᵢ.
Step 4) Determine the centroid cᵢ of the particle Pᵢ, where the centroid cᵢ is the center of mass of the particle Pᵢ, where the coordinates of the centroid cᵢ are the average of the coordinates of each pixel belonging to Pᵢ.
Step 5) Determine the area of the overlap Oᵢ between the particle Pᵢ and the perfect circle Ci with the radius rᵢ and the center cᵢ.
Step 6) Divide the area of Oᵢ by the area of the particle Pᵢ to get the circularity of the particle Pᵢ, where the circularity has a value between 0 and 1, where 1 indicates perfect circularity of the particle.
Step 7) Repeat steps 2 through 6 for all particles shown in the image as a whole.
Step 8) Calculate the circularity of the sample by determining the average value of the circularities of the determine particles.

### G) Scanning Electron Microscopy (SEM) analysis

The circularity of the pCAM material were analyzed by using the images from a scanning electron microscopy (SEM) technique. The measurement is performed with a JEOL JSM 7100F under a high vacuum environment of 9.6x10-5 Pa at 25 °C.

### EXAMPLES AND COMPARATIVE EXAMPLES

The present disclosure is further illustrated in the following examples and comparative examples.

### Example 1 (EX1)

A positive electrode active precursor material EX1 was prepared by the following process:
1.5 L of nickel-manganese- containing seed slurry having a median particle size D50 of 1.0 µm, a solids content of 120 g/L and a molar ratio of Ni:Mn of 35:65, and 7.25 L of DI water were added to provide a starting solution for a stirred tank reactor with a liquid volume of 8.75 L, equipped with a turbine impeller for stirring and a concentrator (i.e. a filtering device) for withdrawing mother liquor from the reactor. The pH of the starting solution was adjusted to 10.0 by the addition of 220 g/L NaOH solution, followed by heat adjustment at 35°C. Nitrogen gas was supplied trough the reactor to prevent oxidation during precipitation process. Then, reagents consisting of a sulfate solution with 120 g/L of nickel and manganese metals at a molar ratio of Ni:Mn of 35:65 and 220 g/L NaOH solution were continuously added to the reactor at an average feed rate of 8.4 mL/h for the nickel manganese sulfate solution, while the NaOH solution was added in such a way that the molar ratio of OH- ions provided to the metals fed was about 2, respectively. The pH of a slurry thus obtained was maintained around 10.0 by adjusting the NaOH solution feed. The process was carried out in a batchwise manner, with a portion of the mother liquor obtained occasionally being withdrawn from the reactor through the filtering device to continue the reaction. The feeding of the reagents was stopped when the particles reached a median particle size D50 of 3.0 µm.

During the precipitation process the stirring of the turbine impeller was set at 1200 rpm, corresponding to an energy input of 57.85 W/L. An ultrasonic environment was generated by using an ultrasonic source, specifically a VCX750 ultrasonic processor, operating at a frequency of 20 kHz, with a 12 mm probe and a titanium horn. The ultrasonic source was placed orthogonally to the nickel manganese sulfate solution feed tube approximately 4 mm from the inner wall of the tip of the nickel manganese sulfate solution feed tube inside the reactor (the hydraulic diameter of the tip of the nickel manganese sulfate solution feed tube was 4 mm). The amplitude of the ultrasonic environment was set to 60 µm.

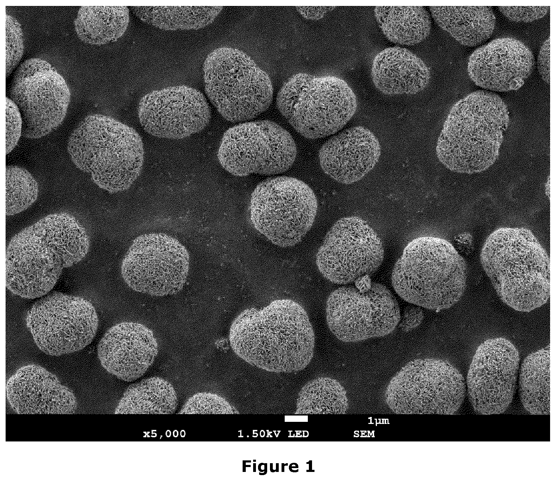

The slurry obtained was washed and filtered with a Büchner funnel, and the cake obtained was dried for 24 hours in an oven at 120°C in ambient atmosphere. The SEM of the powder product at 5000x magnification can be seen in Figure 1.

### Comparative example 1 (CEX1)

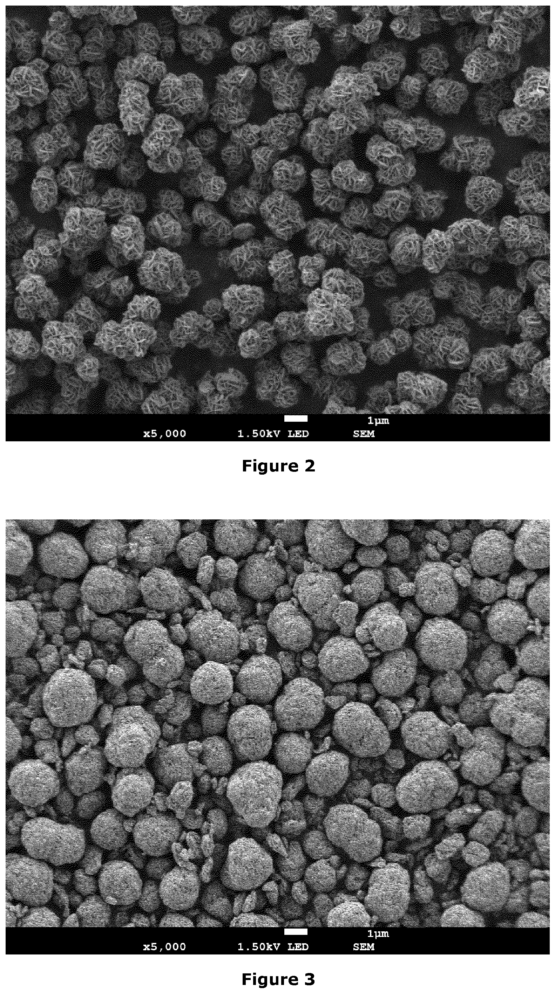

A positive electrode active precursor material CEX1 was prepared according to the same method as EX1 except that ultrasonication (i.e. ultrasonic environment) was not used. The SEM of the powder product at 5000x magnification can be seen in Figure 2.

### Example 2 (EX2)

A positive electrode active precursor material EX2 was prepared according to the same method as EX 1 except that the pH was set to 10.3.

### Comparative example 2 (CEX2)

A positive electrode active precursor material CEX2 was prepared according to the same method as EX2 except that ultrasonication was not used.

### Example 3 (EX3)

A positive electrode active precursor material EX3 was prepared according to the same method as EX1 except that the pH was set to 10.5.

### Comparative example 3 (CEX3)

A positive electrode active precursor material CEX3 was prepared according to the same method as EX3 except that ultrasonication was not used.

### Example 4 (EX4)

A positive electrode active precursor material EX4 was prepared according to the same method as EX1 except that the pH was set to 10.8.

### Comparative example 4 (CEX4)

A positive electrode active precursor material CEX4 was prepared according to the same method as EX4 except that ultrasonication was not used.

### Comparative example 5 (CEX5)

A positive electrode active precursor material CEX5 was prepared according to the same method as EX1 except that the pH was set to 11.0.

### Comparative example 6 (CEX6)

A positive electrode active precursor material CEX6 was prepared according to the same method as EX1 except that the pH was set to 11.0 and ultrasonication was not used.

### Example 6 (EX6)

A positive electrode active precursor material EX6 was prepared according to the same method as EX1 except that 600 ml of the slurry obtained from EX3 was used along with 8150 ml of DI water as the starting solution. Other differences were that the stirring was set to 14.31 W/L and the feed of the reagents was stopped when the particles reached a median particle size D50 of 6.0 µm.

### Example 7 (EX7)

A positive electrode active precursor material EX7 was prepared according to the same method as EX1 except that 200 ml of the slurry obtained from EX3 was used along with 8550 ml of DI water as the starting solution. Other differences were that the stirring was set to 14.31 W/L and the feed of the reagents was stopped when the particles reached a median particle size D50 of 10 µm.

### Example 8 (EX8)

A positive electrode active precursor material EX8 was prepared according to the same method as EX7 except that the amplitude of the ultrasonication was set to 30 um.

### Comparative example 7 (CEX7)

A positive electrode active precursor material CEX7 was prepared according to the same method as EX7 except that there was no ultrasonication and the stirring was set to 4.2 W/L.

### Comparative example 8 (CEX8)

A positive electrode active precursor material CEX8 was prepared according to the same method as EX1 except that the pH was set to 11.0, the amplitude of the ultrasonication was set to 120 um, and the stirring was set to 57.9 W/L.

### Comparative example 9 (CEX9)

A positive electrode active precursor material CEX9 was prepared according to the same method as EX1 except that the pH was set to 11.0, the amplitude of the ultrasonication was set to 120 um, and the stirring was set to 33.5 W/L.

### Comparative example 10 (CEX10)

A positive electrode active precursor material CEX10 was prepared according to the same method as EX1 except that the pH was set to 11.0, the amplitude of the ultrasonication was set to 120 um, and the stirring was set to 14.31 W/L.

### Comparative example 11 (CEX11)

A positive electrode active precursor material CEX11 was prepared according to the same method as EX1 except that the pH was set to 11.0, the amplitude of the ultrasonication was set to 120 um, and the stirring was set to 4.2 W/L.

### Comparative example 12 (CEX12)

A positive electrode active precursor material CEX12 was prepared according to the same method as EX1 except that the pH was set to 11.0, the amplitude of the ultrasonication was set to 60 um, and the stirring was set to 33.5 W/L.

### Comparative example 13 (CEX13)

A positive electrode active precursor material CEX13 was prepared according to the same method as EX1 except that the pH was set to 11.0, the amplitude of the ultrasonication was set to 60 um, and the stirring was set to 14.31 W/L.

### Comparative example 14 (CEX14)

A positive electrode active precursor material CEX14 was prepared according to the same method as EX1 except that the pH was set to 11.0, the amplitude of the ultrasonication was set to 60 um, and the stirring was set to 4.2 W/L.

### Discussion of the results

Table 1 provides an overview of the process conditions of the examples, including pH, ultrasonic wave amplitude, and mechanical agitation power. Table 2 provides a summary of the compositional and structural characteristics of the resulting powder product from the examples, including metal composition in mol%, particle size D50, tap density, specific surface area, sulfate amount, and circularity.

As illustrated in Table 1, samples EX1, EX2, EX3, and EX4 were produced under similar conditions, with the exception of the precipitation pH, which was adjusted to 10, 10.3, 10.5, and 10.8, respectively. Conversely, samples CEX1, CEX2, CEX3, and CEX4 were produced under similar pH conditions but without the application of an ultrasonic environment. Table 2 demonstrates that the structural characteristics of the resultant powder are significantly improved when an ultrasonic environment is employed. Specifically, in EX1-EX4 the tap density and surface area are increased, sulfate impurities are reduced, and particle circularity is improved compared to CEX1-CEX4. EX5 further demonstrates the improvement of the structural characteristics at a pH of 9.5.

CEX5 and CEX6 were produced under conditions of pH of 11, with and without the application of an ultrasonic environment, respectively. As shown in Table 2, both comparative examples resulted in rather low BET values and low circularity. CEX5 demonstrates that when the ultrasonic environment is applied under conditions of pH of 11 a non-uniform product is obtained, as illustrated in Figure 3, where the lack of uniformity can be seen. The conditions of pH of 11 are further demonstrated by CEX8-CEX14, which were subjected to alternating ultrasonic environments and different mechanical agitation power densities. None of these comparative examples resulted in a uniform product. CEX9 and CEX11-CEX14 lack analytical data because their precipitation processes did not achieve an median particle size (D50) of 3 µm due to nucleation of new particles.

EX6 demonstrates the effect with median particle size (D50) of 5.9, as shown in Table 2. EX7 and EX8 demonstrate the effect on median particle size (D50) values of around 10. EX7 and EX8 were produced under the same conditions, except that in EX7, the ultrasonic amplitude was set to 60 µm while in EX8 it was set to 30 µm. CEX7 was produced under the same conditions without an ultrasonic environment. There is a clear trend observed with ultrasonic amplitudes of 0 µm (CEX7), 30 µm (EX8) and 60 µm (EX7): as the amplitude increases, both the tap density and surface area increase, sulfate impurities decrease, and particle circularity improves.

In summary, all examples EX1-EX8 produced pCAM with excellent properties. Specifically, the use of ultrasonic waves improves tap density, specific surface area, and particle sphericity while reducing sulfate impurities. Examples EX1-EX5 demonstrate that combining ultrasonication with pH values of less than 11 results in superior properties compared to Comparative Examples CEX1-CEX4. Comparative Examples CEX5 and CEX6 demonstrate that when the pH is not less than 11, the powder product is non-uniform. Examples EX6-EX8 demonstrate that the process is effective for producing particle sizes up to 10 µm, indicating that the process is not limited to small particle sizes. Examples EX7 and EX8 further illustrate the effect of ultrasonic amplitude compared to Comparative Example CEX7. Comparative Examples CEX8-CEX14 demonstrate that when the pH is not less than 11, no combination of conditions results in a uniform product with excellent properties. These examples clearly highlight the effectiveness of ultrasonic treatment in producing high-quality powder products.

**Table 1**

| Sample ID | pH | Ultrasonic wave amplitude [um] | Mechanical agitation / stirring [W/L] |
|---|---|---|---|
| EX1 | 10 | 60 | 57.9 |
| CEX1 | 10 | - | 57.9 |
| EX2 | 10.3 | 60 | 57.9 |
| CEX2 | 10.3 | - | 57.9 |
| EX3 | 10.5 | 60 | 57.9 |
| CEX3 | 10.5 | - | 57.9 |
| EX4 | 10.8 | 60 | 57.9 |
| CEX4 | 10.8 | - | 57.9 |
| CEX5 | 11 | 60 | 57.9 |
| CEX6 | 11 | - | 57.9 |
| EX5 | 9.5 | 60 | 57.9 |
| EX6 | 10 | 60 | 14.31 |
| EX7 | 10 | 60 | 14.31 |
| EX8 | 10 | 30 | 14.31 |
| CEX7 | 10 | - | 4.2 |
| CEX8 | 11 | 120 | 57.9 |
| CEX9 | 11 | 120 | 33.5 |
| CEX10 | 11 | 120 | 14.31 |
| CEX11 | 11 | 120 | 4.2 |
| CEX12 | 11 | 60 | 33.5 |
| CEX13 | 11 | 60 | 14.31 |
| CEX14 | 11 | 60 | 4.2 |

**Table 2**

| Sample ID | Composition [mol%] | | Particle size D50 [µm] | Tap density [g/cm³] | Specific surface area (BET) [m²/g] | SO4 -% | Circulari ty |
|---|---|---|---|---|---|---|---|
| | Ni | Mn | | | | | |
| EX1 | 35.2 1 | 64.7 9 | 3.1 | 1.58 | 51.39 | 0.57 | 0.92 |
| CEX1 | 36.2 0 | 63.8 0 | 2.7 | - | 32.12 | 0.38 | 0.84 |
| EX2 | 35.2 1 | 64.7 9 | 3.1 | 2 | 28.52 | 0.22 | 0.92 |
| CEX2 | 36.2 0 | 63.8 0 | 3 | 1.28 | 28.25 | 0.38 | 0.84 |
| EX3 | 36.1 9 | 63.8 1 | 3.2 | 1.86 | 25.57 | 0.19 | 0.93 |
| CEX3 | 35.3 2 | 64.6 8 | 3.1 | 1.25 | 28.51 | 0.52 | 0.89 |
| EX4 | 35.0 8 | 64.9 2 | 3 | 1.78 | 23.02 | 0.14 | 0.93 |
| CEX4 | 36.5 2 | 63.4 8 | 3 | 1.6 | 20.12 | 0.19 | 0.89 |
| CEX5 | 35.5 6 | 64.4 4 | 2.5 | 1.98 | 18.36 | 0.1 | 0.85 |
| CEX6 | 35.0 3 | 64.9 7 | 2.9 | 1.98 | 10.82 | 0.16 | 0.88 |
| EX5 | 35.1 7 | 64.8 2 | 3.1 | 1.63 | 38.71 | 0.82 | 0.92 |
| EX6 | 35.3 9 | 64.6 1 | 5.9 | 1.52 | 30.82 | 1.01 | 0.96 |
| EX7 | 36.4 5 | 63.5 5 | 9.5 | 1.4 | 43.54 | 0.82 | 0.92 |
| EX8 | 36.1 3 | 63.8 7 | 9.3 | 1.17 | 40.31 | 1.5 | 0.90 |
| CEX7 | 36.7 6 | 63.2 4 | 9.6 | 1.04 | 34.69 | 1.67 | 0.87 |
| CEX8 | - | - | 1.8 | 1.89 | 19.74 | 0.09 | 0.89 |
| CEX9 | - | - | - | - | - | - | - |
| CEX10 | 35.6 8 | 64.2 3 | 1.8 | 1.91 | 21.2 | 0.15 | 0.81 |
| CEX11 | - | - | - | - | - | - | - |
| CEX12 | - | - | - | - | - | - | - |
| CEX13 | - | - | - | - | - | - | - |
| CEX14 | - | - | - | - | - | - | - |

## Claims

1. A method for producing a particulate metal M-based material, being hydroxide, oxyhydroxide, oxide, or any combination thereof,
the method comprising
(a) providing an aqueous solution (Aₛ) and a precipitating agent, wherein the aqueous solution (Aₛ) contains salts of metal M having Ni, Mn, Co in a molar ratio of 1-x-y : x : y, wherein 0.15≤1-x-y-z≤0.45, 0.55≤x≤0.85, 0.00≤y≤0.15; and
(b) combining the aqueous solution (Aₛ) and the precipitating agent at a pH value of less than 11.0, determined at 20°C, thereby obtaining a slurry comprising the particulate metal M-based material,
wherein at least a portion of step (b) is performed in an ultrasonic environment.

2. The method of claim 1, wherein the ultrasonic environment comprises sound waves with an amplitude of at least 24 µm, preferably at least 30 µm, more preferably at least 48 µm.

3. The method of any of the preceding claims, wherein the ultrasonic environment comprises sound waves with an amplitude of at most 120 µm, preferably at most 96 µm, more preferably at most 90 µm, and most preferably at most 72 µm.

4. The method of any of the preceding claims, wherein the combining in step (b) comprises stirring with at least 14.31 W/L when the median particle size D50 of the slurry is 3 µm or less.

5. The method of any of the preceding claims, wherein the combining in step (b) comprises stirring with less than 17.1 W/L when the median particle size D50 of the slurry is 6 µm or more.

6. The method of any of the preceding claims, wherein the pH of the slurry is 10.8 or less, or 10.5 or less, or 10.3 or less, or 10.1 or less, as determined at 20°C.

7. The method of any of the preceding claims, wherein the pH of the slurry is more than 9.

8. The method of any of the preceding claims, wherein the step (b) is carried out at a temperature range of 30-60°C.

9. The method of any of the preceding claims, wherein the solution (Aₛ) and the precipitating agent are combined until the median particle size D50 in the slurry is 2.5-15.0 µm or 2.5-10.0 µm or 2.5-6.0 µm.

10. The method of any of the preceding claims, wherein in the beginning of step (b) a seed slurry comprising particles of hydroxide or oxyhydroxide of metals Mc is combined with the solution (As) and the precipitating agent.

11. The method of claim 10 wherein the M_{c}=Ni_{1-xc-yc-zc}Mn_{xc}Co_{yc}, with 0≤xc≤0.85, 0≤yc≤0.35, 0≤zc<0.1, and 0.15≤1-xc-yc-zc≤1.-

12. The method of claim 10 or 11, wherein the seed slurry contains NH_{3(aq)} less than or equal to 0.4 g/l, or less than or equal to 0.3 g/l, or less than or equal to 0.2 g/l or less than or equal to 0.1 g/l.

13. The method of any of the preceding claims, wherein the median particle size D50 in the seed slurry is 0.7-3.0 µm or 0.7-2.0 µm.

14. The method of any of the preceding claims, wherein the precipitating agent comprises at least one alkali metal hydroxide such as sodium hydroxide or potassium hydroxide, preferably wherein the precipitating agent is provided as a solution.

15. The method of any of the preceding claims, wherein step (b) is carried out without provision of a source of ammonia.
